# EUROPÄISCHE PATENTANMELDUNG

(11) **EP 4 105 511 A1**
(43) Veröffentlichungstag der Anmeldung: **21.12.2022**
(21) Anmeldenummer: 22175067.2
(22) Anmeldetag: 24.05.2022
(51) Int. Cl.: F16D 65/00

(54) **BREMSSTAUBPARTIKELFILTER MIT EINEM FILTEREINSATZ**

(30) Priorität: 09.06.2021 DE 102021114797
(71) Anmelder: MANN+HUMMEL GmbH, 71636 Ludwigsburg (DE)
(72) Erfinder: WÖRZ, Tobias, 71397 Leutenbach (DE); WELLER, Benedikt, 71711 Steinheim (DE); BOCK, Lukas, 74321 Bietigheim-Bissingen (DE); PRICKEN, Franc, 74348 Lauffen (DE); PFANNKUCH, Steffen, 71636 Ludwigsburg (DE); ROCKINGER, Theodor, 84163 Marklkofen (DE); AIGNER, Andreas, 84431 Pilsting (DE); BAMMERSPERGER, Ludwig, 94419 Reisbach (DE); PLENK, Philipp, 94405 Landau/Isar (DE); GEHWOLF, Klaus, 94437 Mamming (DE); REINERS, Oliver, 28844 Weyhe (DE); MACK, Klaus, 74239 Hardthausen (DE)
(74) Vertreter: Mann + Hummel Intellectual Property

(57) **Zusammenfassung**

Die Erfindung betrifft einen Bremsstaubpartikelfilter (18) für eine Scheibenbremsanordnung mit einer Bremsscheibe und einem Bremssattel, wobei der Bremsstaubpartikelfilter (18) ein Gehäuse (22) mit zwei Gehäuseseitenwänden (32, 34) und mit einer sich zwischen den Gehäuseseitenwänden (32, 34) erstreckenden Gehäuseumfangswand (36) aufweist, wobei in dem Gehäuse (22) ein L-förmiger Filtereinsatz (42) mit einem Filtermedium (46) aufgenommen ist, der sich an einer der Gehäuseseitenwände (32, 34) und an der Gehäuseumfangswand (36) erstreckt, wobei der Filtereinsatz (42) eine gebogene Umfangskante (58) aufweist, die in eine gebogene Aufnahmenut (60) des Gehäuses (22) eingreift. Die Erfindung betrifft ferner eine Scheibenbremsanordnung aufweisend eine Bremsscheibe, einen Bremssattel und einen solchen Bremsstaubpartikelfilter (18). Weiterhin betrifft die Erfindung einen Filtereinsatz (42) für einen Bremsstaubpartikelfilter (18), wobei der Filtereinsatz (42) L-förmig ausgebildet ist mit einem Filtermedium (46) zum bereichsweißen Überdecken einer Reibfläche und einer Mantelfläche einer Bremsscheibe, und wobei der Filtereinsatz (42) eine gebogene Umfangskante (58) aufweist, die über das Filtermedium (46) vorsteht. Schließlich betrifft die Erfindung eine Verwendung eines solchen Filtereinsatzes in einem Bremsstaubpartikelfilter.

## Beschreibung

### Technisches Gebiet

Die Erfindung betrifft einen Bremsstaubpartikelfilter für eine Scheibenbremsanordnung, wobei der Bremsstaubpartikelfilter ein Gehäuse und einen Filtereinsatz aufweist, eine Scheibenbremsanordnung mit einem Bremsstaubpartikelfilter, einen Filtereinsatz für einen Bremsstaubpartikelfilter sowie eine Verwendung eines Filtereinsatzes in einem Bremsstaubpartikelfilter.

### Stand der Technik

Abrieb von Bremsen, sogenannter Bremsstaub, trägt zum Eintrag von Feinstaub in die Umwelt durch Kraftfahrzeuge bei. Der Abrieb besteht dabei insbesondere aus Partikeln, die von einer Bremsscheibe und Bremsbelägen abgerieben wurden. Neben der Umweltbelastung führt Bremsstaub zu hartnäckigen Verschmutzungen, welche die Funktion der Bremse und von an die Bremse angrenzenden Bauteilen beeinträchtigen können. Insbesondere auf Leichtmetallfelgen werden Ablagerungen von Bremsstaub zudem als ästhetisch störend empfunden.

Aus US 2018/0031059 A1 ist ein Bremsstaubpartikelfilter bekannt geworden, bei welchem Ringsektoren ein Gehäuse für einen Filter bilden. Der Filter besteht aus einem axial inneren Filter in einem inneren Ringsektor und einem axial äußeren Filter in einem äußeren Ringsektor.

Da sich die Filterelemente von Bremsstaubpartikelfiltern mit der Zeit zusetzen, müssen diese gelegentlich ausgetauscht werden. Ein altes Filterelement muss hierzu entfernt und ein neues Filterelement eingesetzt werden. Für die Wirksamkeit des Bremsstaubpartikelfilters ist es wichtig, dass ein möglichst großer Anteil eines mit Bremsstaubpartikeln beladenen Luftstroms durch das Filterelement geleitet wird.

Es ist eine Aufgabe der Erfindung, die Wirksamkeit eines Bremsstaubpartikelfilter mit einem einfach austauschbaren Filtereinsatz zu verbessern.

### Offenbarung der Erfindung

Diese Aufgabe wird durch einen Bremsstaubpartikelfilter gemäß Anspruch 1, eine Scheibenbremsanordnung gemäß Anspruch 16, einen Filtereinsatz gemäß Anspruch 17 und eine Verwendung gemäß Anspruch 19 gelöst.

### Erfindungsgemäßer Bremsstaubpartikelfilter

Erfindungsgemäß ist ein Bremsstaubpartikelfilter für eine Scheibenbremsanordnung mit einer Bremsscheibe und einem Bremssattel vorgesehen. Der Bremsstaubpartikelfilter weist ein Gehäuse mit zwei Gehäuseseitenwänden und mit einer sich zwischen den Gehäuseseitenwänden erstreckenden Gehäuseumfangswand auf. Das Gehäuse dient zum zumindest bereichsweisen Überdecken der Bremsscheibe. Das Gehäuse bildet mit anderen Worten einen Gehäuseinnenraum zur zumindest teilweisen Aufnahme der Bremsscheibe aus. Die Gehäuseseitenwände sind in axialer Richtung voneinander beabstandet. Die Bremsscheibe ist zwischen den Gehäuseseitenwänden anordenbar. Die Gehäuseumfangswand befindet sich radial außen. Die Gehäuseumfangswand dient zum zumindest bereichsweisen Überdecken einer Mantelfläche der Bremsscheibe.

Richtungsangaben wie beispielsweise axial oder radial beziehen sich für die Darstellung der vorliegenden Erfindung auf eine Drehachse der Bremsscheibe. Für die Beschreibung des Bremsstaubpartikelfilters und des Filtereinsatzes wird insofern auf den an der Scheibenbremsanordnung montierten Zustand abgestellt.

Der Bremsstaubpartikelfilter weist einen L-förmigen Filtereinsatz mit einem Filtermedium auf. Die L-Form des Filtereinsatzes ist insbesondere in einem Querschnitt, dessen Schnittebene die Drehachse der Bremsscheibe enthält oder parallel zu dieser verläuft, ersichtlich. Der Filtereinsatz ist in dem Gehäuse aufgenommen. Der Filtereinsatz erstreckt sich (mit einem der Schenkel des L) an einer der Gehäuseseitenwände. Weiterhin erstreckt sich der Filtereinsatz (mit dem anderen Schenkel des L) an der Gehäuseumfangswand. Der Filtereinsatz kann ein unten beschriebener, erfindungsgemäßer Filtereinsatz sein. Weitere Merkmale des erfindungsgemäßen Filtereinsatzes können bei dem Filtereinsatz des erfindungsgemäßen Bremsstaubpartikelfilters vorgesehen sein.

Der Filtereinsatz weist eine gebogene Umfangskante auf. Die gebogene Umfangskante erstreckt sich vorzugsweise entlang des freien Endes des an der Gehäuseumfangswand angeordneten Schenkels des Filtereinsatzes. Das Gehäuse weist eine gebogene Aufnahmenut auf. Die Aufnahmenut erstreckt sich vorzugsweise an einer der Gehäuseseitenwände. Die gebogene Umfangskante greift in die gebogene Aufnahmenut ein. Die Umfangskante und die Aufnahmenut können (im montierten Zustand) zumindest bereichsweise konzentrisch zur Drehachse der Bremsscheibe verlaufen. Durch den Eingriff der Umfangskante in die Aufnahmenut wird einerseits der Filtereinsatz gegenüber dem Gehäuse abgedichtet. Ein Austritt von ungefilterter Luft aus dem Bremsstaubpartikelfilter wird dadurch vermieden. Zum anderen wird der Filtereinsatz durch den Eingriff der Umfangskante in die Aufnahmenut im Gehäuse fixiert. Dies vereinfacht die Montage und Befestigung des Filtereinsatzes im Gehäuse.

Der Filtereinsatz ist grundsätzlich durch eine gemeinsame handhabbare Baueinheit gebildet. Die Komponenten des Filtereinsatzes sind vorzugsweise unlösbar miteinander verbunden.

Bei einer bevorzugten Ausführungsform ist in der Aufnahmenut eine Dichtschnur angeordnet. Die Abdichtung des Filtereinsatzes gegenüber dem Gehäuse kann dadurch weiter verbessert werden. Typischerweise enthält die Dichtschnur Keramikfasern und/oder Glasfasern, es kommen aber thermisch resistente Fasern in Frage. Insbesondere kann die Dichtschnur aus Keramikfasern oder Glasfasern bestehen. Eine solche Dichtschnur hält den an einer Bremsanlage auftretenden Temperaturen von bis zu 700°C stand. Die Dichtschnur kann die Fasern in Form eines Gewebes enthalten. Die Dichtschnur liegt im montierten Zustand berührend an der Umfangskante und an der Aufnahmenut an. Die Dichtschnur kann eine Vollschnur oder eine Hohlkordel sein. Vorzugsweise drückt die Umfangskante zentrisch auf die Dichtschnur.

Bei einer alternativen Ausführungsform bilden die Aufnahmenut und die in die Aufnahmenut eingreifende Umfangskante eine Labyrinthdichtung aus. Dies kann die Montage des Filtereinsatzes bei einer dennoch guten Dichtwirkung vereinfachen.

Vorteilhafterweise ist das Gehäuse zweiteilig ausgebildet. Eine erste der Gehäuseseitenwände kann an einem ersten Gehäuseteil ausgebildet sein. Die zweite der Gehäuseseitenwände kann an einem zweiten Gehäuseteil ausgebildet sein. Vorzugsweise ist die Gehäuseumfangswand an dem zweiten Gehäuseteil ausgebildet. Das erste Gehäuseteil ist typischerweise axial innen (d. h. einer Mittelebene eines Fahrzeugs mit dem Bremsstaubpartikelfilter zugewandt bzw. axial innerhalb der Bremsscheibe am Fahrzeug) angeordnet; das zweite Gehäuseteil kann entsprechend axial außen (d. h. nach außen gewandt bzw. axial außerhalb der Bremsscheibe am Fahrzeug) angeordnet sein.

Das erste Gehäuseteil kann eine Befestigungseinrichtung zur Befestigung des Bremsstaubpartikelfilters an einer Fahrzeugstruktur, wie beispielsweise einem Radträger, aufweisen. Die Befestigungseinrichtung kann eine oder mehrere Ausnehmungen zum Durchführen von Befestigungsmitteln, wie beispielsweise Schrauben, aufweisen. Ferner kann das erste Gehäuseteil zumindest teilweise ein Spritzschutzblech der Scheibenbremsanordnung ausbilden.

Besonders bevorzugt sind die beiden Gehäuseteile lösbar aneinander befestigbar. Zum Austausch des Filtereinsatzes kann das Gehäuse dadurch in einfacher Weise geöffnet und geschlossen werden.

Vorteilhafterweise ist die Aufnahmenut im ersten Gehäuseteil ausgebildet. Beim Öffnen des Gehäuses verbleibt das erste Gehäuseteil typischerweise am Fahrzeug. Dies vereinfacht den Austausch des Filtereinsatzes. Der Filtereinsatz kann am zweiten Gehäuseteil vormontiert und sodann mit dem zweiten Gehäuseteil am ersten Gehäuseteil befestigt werden. Alternativ kann der Filtereinsatz für sich in die Umfangsnut des ersten Gehäuseteils eingesetzt und sodann mit dem zweiten Gehäuseteil überdeckt werden.

Das erste Gehäuseteil kann axiale Befestigungsfortsätze aufweisen, an welchen der Filtereinsatz und das zweite Gehäuseteil befestigbar sind. Die Befestigungsfortsätze erstrecken sich mit anderen Worten in axialer Richtung. Die Befestigungsfortsätze können sich von der ersten Seitenwand zu der zweiten Seitenwand erstrecken. Vorzugsweise ist der Filtereinsatz in axialer Richtung auf die Befestigungsfortsätze aufschiebbar. Der Filtereinsatz kann Ausnehmungen für einen Eingriff der Befestigungsfortsätze aufweisen.

Die Befestigungsfortsätze können einstückig mit dem ersten Gehäuseteil ausgebildet sein. Dies vereinfacht die Erstmontage des Bremsstaubpartikelfilters.

Alternativ können die Befestigungsfortsätze an das erste Gehäuseteil anschraubbar sein. Dies kann die Herstellung des ersten Gehäuseteils vereinfachen. Die Befestigungsfortsätze können Stehbolzen sein. Die Befestigungsfortsätze können einen Außengewindeabschnitt zum Eingriff in einen Innengewindeabschnitt des ersten Gehäuseteils aufweisen.

Der Filtereinsatz und das zweite Gehäuseteil können in axialer Richtung gegen das erste Gehäuseteil spannbar sein. Dies erlaubt eine Montage von axial außen. In radialer Richtung kann dadurch Bauraum eingespart werden. Es können Schrauben in axialer Richtung das erste Gehäuseteil und den Filtereinsatz durchragen und in die Befestigungsfortsätze eingreifen.

Der Filtereinsatz und das zweite Gehäuseteil können in radialer Richtung gegen das erste Gehäuseteil spannbar sein. Dies erlaubt eine Montage zumindest teilweise in radialer Richtung. In axialer Richtung kann dadurch Bauraum eingespart werden. Vorzugsweise sind der Filtereinsatz und das zweite Gehäuseteil gegen die Befestigungsfortsätze spannbar. Es können Schrauben in radialer Richtung das erste Gehäuseteil und den Filtereinsatz durchragen und in die Befestigungsfortsätze eingreifen.

Der Filtereinsatz und das Gehäuse, insbesondere das zweite Gehäuseteil, können von radial und/oder axial außen lösbar aneinander befestigt sein, insbesondere miteinander verschraubbar, sein. Dies erlaubt eine Vormontage des Filtereinsatzes an dem zweiten Gehäuseteil. Zudem wird das Filterelement zusätzlich am Gehäuse fixiert. Es können Schrauben das Gehäuse, insbesondere das zweite Gehäuseteil, sowie Filtereinsatz durchragen und in korrespondierende Gegengewinde der Befestigungsfortsätze eingreifen.

In einer bevorzugten Weiterbildung weist der Filtereinsatz an einer Umfangswand und/oder Seitenwand zumindest eine Bohrung auf, die mit einer Positionierung der Gegengewinde der Befestigungsfortsätze korrespondierend vorliegt. Die zur Verbindung eingesetzten Schrauben können dadurch durch den Filtereinsatz geführt werden und den Filtereinsatz mittelbar, d.h. über eine Verschraubung des zweiten Gehäuseteils mit dem ersten Gehäuseteil, an dem ersten Gehäuseteil festlegen.

Die Umfangskante des Filtereinsatzes kann in axialer Richtung in die Aufnahmenut des Gehäuses eintauchen. Dies kann die Dichtwirkung in radialer Richtung verbessern, was insbesondere bei innenbelüfteten Bremsscheiben vorteilhaft ist. Zudem kann dies die Montage des Filtereinsatzes vereinfachen.

Der Filtereinsatz kann ein Einsatzteil mit einer Seitenwand und einer Umfangswand aufweisen. Das Einsatzteil ist, insbesondere im Querschnitt gesehen, L-förmig und stellt eine Tragstruktur zur Aufnahme des Filtermediums sowie zur Verbindung mit dem Gehäuse bereit. Die Seitenwand des Filtereinsatzes ist an bzw. gegenüberliegend zu einer der Gehäuseseitenwände, vorzugsweise der zweiten Gehäuseseitenwand, anordenbar; die Umfangswand des Filtereinsatzes ist an bzw. gegenüberliegend zu der Gehäuseumfangswand anordenbar. In der Seitenwand und/oder der Umfangswand des Einsatzteils ist vorteilhafterweise wenigstens eine Öffnung ausgebildet, welche von dem Filtermedium überdeckt ist. Die Öffnung erlaubt einen Durchtritt von Luft durch den Filtereinsatz, wobei Bremsstaubpartikel in dem Filtermedium zurückgehalten werden. Bevorzugt befinden sich sowohl in der Seitenwand als auch der Umfangswand Öffnungen.

Das Filtermedium kann unlösbar an dem Einsatzteil gehalten sein. Das Filtermedium ist vorzugsweise mit dem Einsatzteil verschweißt. Wenn das Ersatzteil eine Öffnung aufweist, kann das Filtermedium mit einem Rand der Öffnung verschweißt sein, bevorzugt durchgängig umlaufend um die Öffnung herum. Ein Austreten von Bremsstaub zwischen dem Filtermedium und dem Einsatzteil hindurch, kann derart zuverlässig vermieden werden.

Vorzugsweise ist das Filtermedium mit einem plissierten Balg gebildet. Dies vergrößert die wirksame Filterfläche.

In Ausführungen, in denen das Eisatzteil sowohl eine Öffnung in der Seitenwand als auch der Umfangswand hat, kann das Filtermedium in zwei getrennten Filtermediumsabschnitten vorliegen, die jeweils mit einem Rand der jeweiligen Öffnung verbunden sind.

Das Filtermedium kann aber auch einstückig sein. Mit anderen Worten können beide Schenkel eines L-förmigen Filtermediums durch entsprechendes Abwinkeln des einstückigen Filtermediums erhalten sein. Alternativ kann das Filtermedium mehrteilig, insbesondere zweiteilig, sein. Die beiden Schenkel des L-förmigen Filtermediums können entsprechend durch jeweils ein separates Filterteil gebildet sein.

Die Gehäuseumfangswand kann wenigstens eine Strömungsöffnung, vorzugsweise mehrere in Umfangsrichtung voneinander beanstandete Strömungsöffnungen, aufweisen. Die wenigstens eine Strömungsöffnung ist grundsätzlich so angeordnet, dass sie im montierten Zustand durch den Filtereinsatz von der Bremsscheibe und dem Bremssattel getrennt ist. Die wenigstens eine Strömungsöffnung ermöglicht ein Austreten von gefilterter Luft aus dem Gehäuse.

### Erfindungsgemäße Scheibenbremsanordnung

In den Rahmen der vorliegenden Erfindung fällt ferner eine Scheibenbremsanordnung aufweisend eine Bremsscheibe, einen Bremssattel und einen oben beschriebenen, erfindungsgemäßen Bremsstaubpartikelfilter. Der Bremsstaubpartikelfilter ist in Drehrichtung der Bremsscheibe bei Vorwärtsfahrt eines Fahrzeugs mit der Scheibenbremsanordnung grundsätzlich dem Bremssattel nachgeordnet. Typischerweise schließt sich der Bremsstaubpartikelfilter unmittelbar an den Bremssattel an. Der Bremssattel kann einen Bremssattelhalter aufweisen. Die Bremsscheibe greift im montierten Zustand zwischen die Gehäuseseitenwände des Bremsstaubpartikelfilters ein. Die Gehäuseumfangswand des Bremsstaubpartikel Filters überdeckt eine Mantelfläche der Bremsscheibe zumindest bereichsweise. Die Bremsscheibe kann eine innenbelüftete Bremsscheibe sein. Der Bremsstaubpartikelfilter der erfindungsgemäßen Scheibenbremsanordnung kann weitere Merkmale des erfindungsgemäßen Bremsstaubpartikelfilters aufweisen.

### Erfindungsgemäßer Filtereinsatz

Ebenfalls in den Rahmen der vorliegenden Erfindung fällt ein Filtereinsatz für einen Bremsstaubpartikelfilter, insbesondere für einen oben beschriebenen, erfindungsgemäßen Bremsstaubpartikelfilter. Der Filtereinsatz ist L-förmig ausgebildet. Der Filtereinsatz weist ein Filtermedium auf zum bereichsweißen Überdecken einer Reibfläche und einer Mantelfläche einer Bremsscheibe. Weiter erfindungsgemäß weist der Filtereinsatz eine gebogene Umfangskante auf. Die Umfangskante steht, vorzugsweise in axialer Richtung, über das Filtermedium vor. Die Umfangskante dient zum Eingreifen in eine gebogene Aufnahmenut eines Gehäuses. Die Umfangskante kann sich an dem der Mantelfläche der Bremsscheibe zugeordnete Schenkel des Filtereinsatzes erstrecken, vorzugsweise an dessen freiem Ende. Das Filtermedium kann einstückig oder mehrteilig sein.

Das Filtermedium kann unlösbar an einem Einsatzteil des Filtereinsatzes gehalten sein, insbesondere mit dem Einsatzteil verschweißt sein. Das Einsatzteil kann wenigstens eine Öffnung aufweisen, die von dem Filtermedium überdeckt ist. Vorzugsweise ist die Umfangskante an dem Einsatzteil ausgebildet.

Der erfindungsgemäße Filtereinsatz kann weitere Merkmale des Filtereinsatzes des oben beschriebenen, erfindungsgemäßen Bremsstaubpartikelfilters aufweisen.

### Erfindungsgemäße Verwendung

Weiterhin in den Rahmen der vorliegenden Erfindung fällt eine Verwendung eines oben beschriebenen, erfindungsgemäßen Filtereinsatzes in einem Bremsstaubpartikelfilter, vorzugsweise einem oben beschriebenen, erfindungsgemäßen Bremsstaubpartikelfilter.

### Kurze Beschreibung der Zeichnungen

Weitere Merkmale und Vorteile der Erfindung ergeben sich aus der nachfolgenden detaillierten Beschreibung von Ausführungsbeispielen der Erfindung, aus den Patentansprüchen sowie anhand der Figuren der Zeichnung, die erfindungsgemäße Einzelheiten zeigen. Die zuvor genannten und noch weiter ausgeführten Merkmale können je einzeln für sich oder zu mehreren in beliebigen, zweckmäßigen Kombinationen bei Varianten der Erfindung verwirklicht sein. Die in der Zeichnung gezeigten Merkmale sind derart dargestellt, dass die erfindungsgemäßen Besonderheiten deutlich sichtbar gemacht werden können.

In der Zeichnung zeigen:
- Fig. 1: eine erfindungsgemäße Scheibenbremsanordnung mit einer Bremsscheibe, einem Bremssattel und einem erfindungsgemäßen Bremsstaubpartikelfilter, in einer schematischen Perspektivansicht;
- Fig. 2: den Bremsstaubpartikelfilter der Scheibenbremsanordnung von Figur 1 umfassend zwei Gehäuseteile und einen erfindungsgemäßen Filtereinsatz in einer schematischen Explosionsdarstellung;
- Fig. 3: den Bremsstaubpartikelfilter von Figur 2 in einer schematischen Ansicht mit Blick radial zu einer Drehachse der Bremsscheibe;
- Fig. 4: den Bremsstaubpartikelfilter von Figur 2 in einer schematischen Schnittansicht mit Schnittrichtung senkrecht zur Drehachse der Bremsscheibe;
- Fig. 5: den Bremsstaubpartikelfilter von Figur 2 in einer schematischen Schnittansicht, mit Schnittrichtung parallel zur Drehachse der Bremsscheibe;
- Fig. 6: eine vergrößerte, schematische Darstellung des Eingriffs einer Umfangskante des Filtereinsatzes des Bremsstaubpartikelfilters von Figur 2 in eine Umfangsnut des Gehäuses, wobei in der Umfangsnut eine keramische Dichtschnur angeordnet ist;
- Fig. 7: eine schematische Explosionsdarstellung einer weiteren Ausführungsform eines erfindungsgemäßen Bremsstaubpartikelfilters mit einem mehrteiligen Gehäuse und einem erfindungsgemäßen Filtereinsatz;
- Fig. 8: den Bremsstaubpartikelfilter von Figur 7 in einer schematischen Schnittansicht mit Schnittrichtung parallel zur Drehachse einer Bremsscheibe;
- Fig. 9: eine vergrößerte, schematische Darstellung von Detail Y aus Figur 8, wobei eine Umfangsnut des Gehäuses und eine vorstehende Umfangskante des Filtereinsatzes eine Labyrinthdichtung ausbilden.

### Ausführungsformen der Erfindung

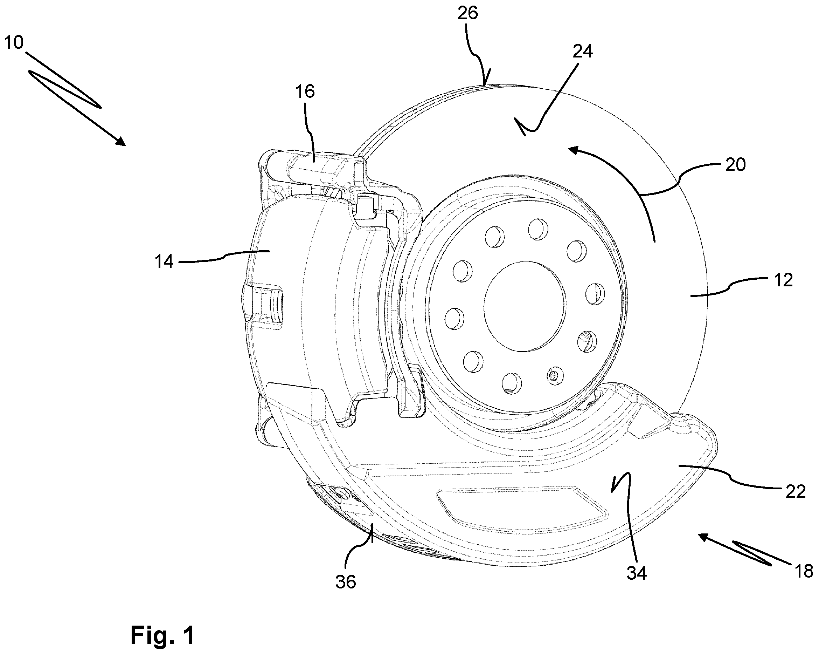

**Figur 1** zeigt eine Scheibenbremsanordnung **10.** Die Scheibenbremsanordnung 10 weist eine Bremsscheibe **12** und einen Bremssattel **14** auf. Die Bremsscheibe 12 ist hier eine innenbelüftete Bremsscheibe. Der Bremssattel 14 kann an einem Bremssattelhalter **16** gehalten sein. Die Scheibenbremsanordnung 10 weist ferner einen Bremsstaubpartikelfilter **18** auf. Der Bremsstaubpartikelfilter 18 ist dem Bremssattel 16 in Drehrichtung **20** der Bremsscheibe 12 (bei Vorwärtsfahrt eines Fahrzeugs mit der Scheibenbremsanordnung 10) nachgelagert. Ein Gehäuse **22** des Bremsstaubpartikelfilters 18 überdeckt die beiden Reibflächen **24** sowie eine Mantelfläche **26** der Bremsscheibe 12 bereichsweise. Das Gehäuse 22 ist unmittelbar angrenzend an den Bremssattel 14 angeordnet.

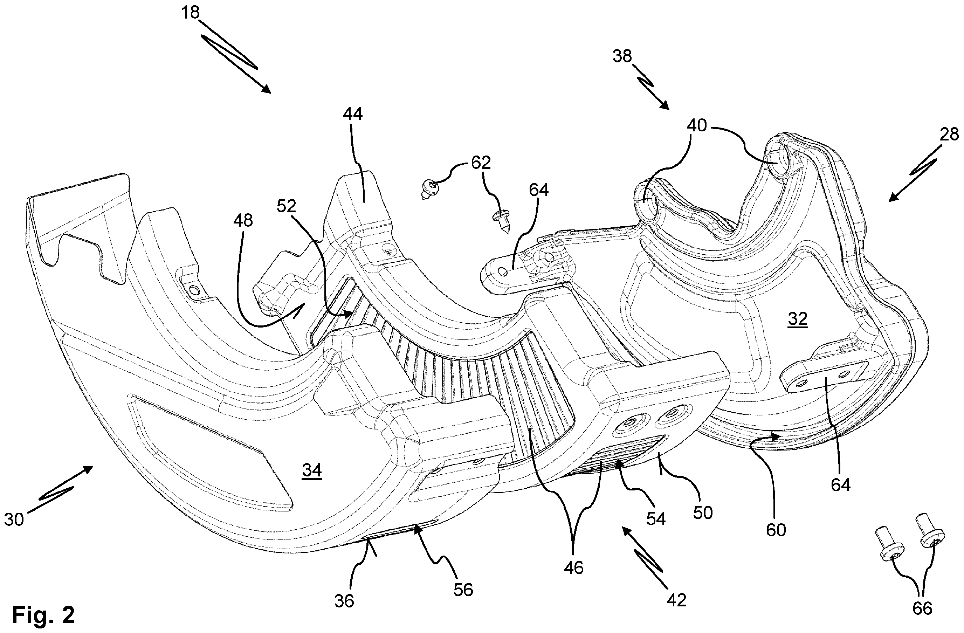

**Figur 2** zeigt den Bremsstaubpartikelfilter 18 in einer Explosionsdarstellung. Das Gehäuse 22 weist ein erstes Gehäuseteil **28** und ein zweites Gehäuseteil **30** auf. An dem ersten Gehäuseteil 28 ist eine erste Gehäuseseitenwand **32** ausgebildet. An dem zweiten Gehäuseteil 30 ist eine zweite Gehäuseseitenwand **34** ausgebildet. Eine Gehäuseumfangswand **36** erstreckt sich im montierten Zustand von der ersten Gehäuseseitenwand 32 zu der zweiten Gehäuseseitenwand 34. Die Gehäuseumfangswand 36 ist hier an dem zweiten Gehäuseteil 30 einstückig mit der zweiten Gehäuseseitenwand 34 ausgebildet. Die Gehäuseseitenwände 32, 34 und die Gehäuseumfangswand 36 definieren einen Innenraum zur teilweisen Aufnahme der Bremsscheibe 12.

Zur Befestigung des Bremsstaubpartikelfilters 18 an einem Fahrzeug ist eine Befestigungseinrichtung **38** vorgesehen. Die Befestigungseinrichtung 38 umfasst hier zwei Ausnehmungen **40** zum Verschrauben des Bremsstaubpartikelfilters 18 mit dem Fahrzeug. Die Befestigungseinrichtung 38 ist vorliegend an dem ersten Gehäuseteil 28 ausgebildet. Im montierten Zustand befindet sich das erste Gehäuseteil 28 mit der ersten Gehäuseseitenwand 32 auf der dem Fahrzeug zugewandten Seite der Bremsscheibe 12; das zweite Gehäuseteil 30 mit der zweiten Gehäuseseitenwand 34 befindet sich entsprechend auf der von dem Fahrzeug abgewandten Seite der Bremsscheibe 12.

Der Bremsstaubpartikelfilter 18 weist einen Filtereinsatz **42** auf. Der Filtereinsatz 42 ist im montierten Zustand in dem Gehäuse 22 angeordnet. Der Filtereinsatz 42 weist ein Einsatzteil **44** und ein Filtermedium **46** auf. Der Filtereinsatz 42 ist L-förmig ausgebildet. Das Einsatzteil 44 weist eine Seitenwand **48** und eine Umfangswand **50** auf. Die Seitenwand 48 und die Umfangswand 50 erstrecken sich im Wesentlichen senkrecht zueinander. Im montierten Zustand befindet sich die Seitenwand 48 an einer der Reibflächen 24 der Bremsscheibe 12; die Umfangswand 50 grenzt an die Mantelfläche 26 der Bremsscheibe 12 an. Der Filtereinsatz 42 bzw. dessen Seitenwand 48 und die Umfangswand 50 sind im montierten Zustand zwischen der Bremsscheibe 12 und dem Gehäuse 22, hier dem zweiten Gehäuseteil 30, konkret der zweiten Gehäuseseitenwand 34 und der Gehäuseumfangswand 36, angeordnet.

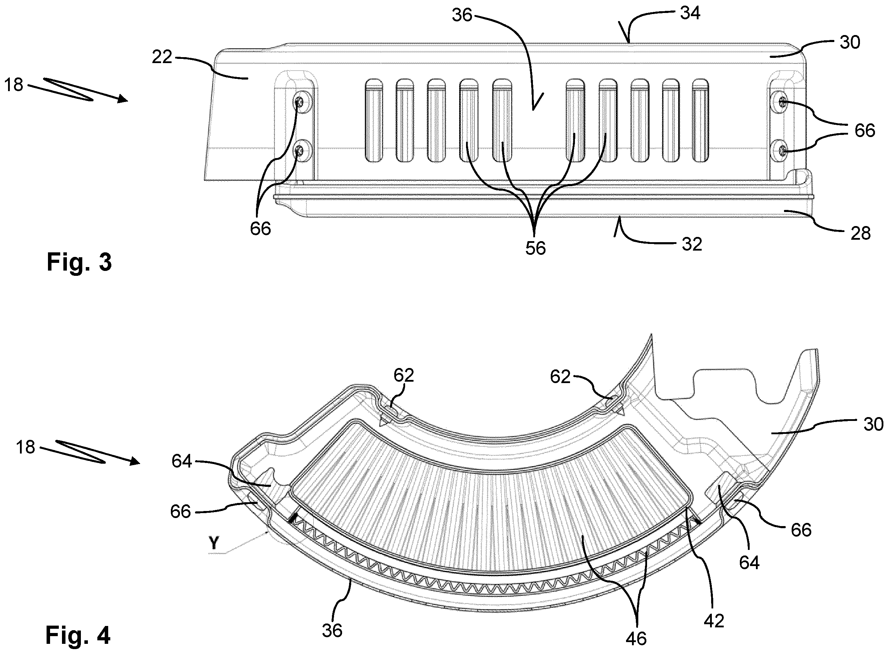

Die Seitenwand 48 und die Umfangswand 50 des Einsatzteils 44 weisen hier je eine Öffnung **52**, **54** auf. Die Öffnungen 52, 54 sind von dem Filtermedium 46 überdeckt. Im Betrieb des Bremsstaubpartikelfilters 18 strömt Luft von der Bremsscheibe 12 her durch die Öffnungen 52, 54 wobei mitgeführte Bremsstaubpartikel in dem Filtermedium 46 zurückgehalten werden. Die gefilterte Luft kann durch mehrere Strömungsöffnungen **56** aus dem Gehäuse 22 austreten, vergleiche **Figur 3**. Die Strömungsöffnungen 56 sind hier in Umfangsrichtung voneinander beabstandet. Die Strömungsöffnungen 56 können in der Gehäuseumfangswand 36 ausgebildet sein.

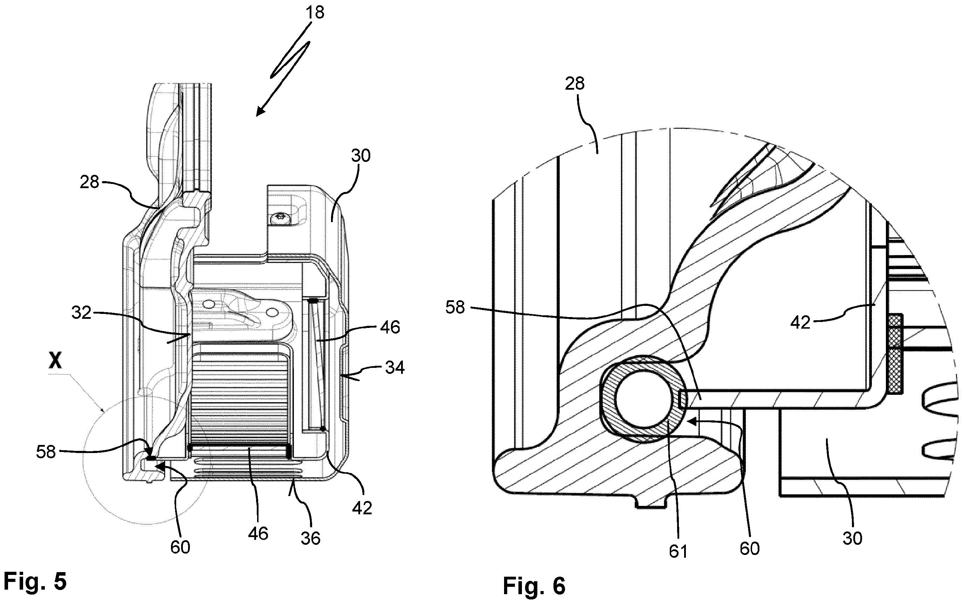

Das Filtermedium 46 weist hier zwei voneinander separate Filterteile auf, vergleiche **Figuren 4** und **5**. Die beiden Filterteile sind jeweils als ein plissierter (mehrfach gefalteter) Balg ausgebildet. Das Filtermedium 46 ist unlösbar an dem Einsatzteil 44 befestigt. Das Filtermedium 46 bzw. die beiden Filterteile können mit dem Einsatzteil 44 verschweißt sein, insbesondere umlaufend um die Öffnungen 52, 54 herum.

Figur 5 zeigt, dass eine gebogene Umfangskante **58** des Filtereinsatzes 42 in eine gebogene Aufnahmenut **60** des Gehäuses 22 eingreift. Die Aufnahmenut 60 und ihr gebogener Verlauf sind auch in Figur 2 zu erkennen. Die Umfangskante 58 und die Aufnahmenut 60 können zumindest abschnittsweise konzentrisch zu einer Drehachse der Bremsscheibe 12 verlaufen.

Die gebogene Umfangskante 58 ist an dem freien Ende der Umfangswand 50 des Filtereinsatzes 42 ausgebildet. Vorliegend bildet ein axialer Endbereich des Einsatzteils 44 die Umfangskante 58 aus. Die Umfangskante 58 steht über das Filtermedium 46 vor. Hier ragt die Umfangskante 58 in axialer Richtung über das Filtermedium 46 hinaus.

Die Aufnahmenut 60 ist vorliegend an dem ersten Gehäuseteil 28 ausgebildet. Hier befindet sich die Aufnahmenut 60 am radial äußeren Ende der ersten Gehäuseseitenwand 32. Die Aufnahmenut 60 ist zu der zweiten Gehäuseseitenwand 34 hin offen. Die Umfangskante 58 ragt in axialer Richtung in die Aufnahmenut 60 hinein.

In der Aufnahmenut 60 kann eine Dichtschnur **61** zwischen der Umfangskante 58 des Filtereinsatzes 42 und dem Gehäuse 22 verpresst sein, siehe **Figur 6****.** Die Dichtschnur 61 kann Keramikfasern aufweisen, insbesondere aus Keramikfasern bestehen. Alternativ könnte die Dichtschnur Glasfasern aufweisen, insbesondere aus Glasfasern bestehen. Vorliegend ist die Dichtschnur 61 als eine Hohlkordel mit einer zentralen Ausnehmung sein ausgebildet. Alternativ könnte die Dichtschnur als Vollschnur mit massivem Querschnitt ausgebildet sein (nicht näher dargestellt). Die Umfangskante 58 kann bezüglich des Querschnitts der Dichtschnur 61 zentral auf die Dichtschnur 61 drücken. Die Umfangskante 58 taucht entsprechend mittig in die Aufnahmenut 60 ein.

Die beiden Gehäuseteil 28, 30 und der Filtereinsatz 42 sind lösbar aneinander befestigt, vergleiche insbesondere Figur 2. Der Filtereinsatz 42 ist über Schrauben **62** von radial innen mit dem zweiten Gehäuseteil 30 verschraubbar. Die Schrauben 62 können Bohrungen in dem zweiten Gehäuseteil 30 durchragen und in Gewindeabschnitte des Einsatzteils 44 eingreifen.

Das erste Gehäuseteil 28 weist Befestigungsfortsätze **64** auf. Die Befestigungsfortsätze 64 erstrecken sich in axialer Richtung von der ersten Gehäuseseitenwand 32 weg. Die Befestigungsfortsätze 64 sind hier einstückig mit dem ersten Gehäuseteil 28 ausgebildet.

Der an dem zweiten Gehäuseteil 30 vormontierte Filtereinsatz 42 kann auf die Befestigungsfortsätze 64 aufgeschoben werden. Die Umfangskante 58 gelang dabei in Eingriff mit der Aufnahmenut 60. Das zweite Gehäuseteil 30 und der Filtereinsatz 42 weisen Bohrungen auf, durch welche Schrauben **66** von radial außen eingesetzt werden können. Die Schrauben 66 greifen in Gewindeabschnitte in den Befestigungsfortsätzen 64 ein. Der Filtereinsatz 42 und das zweite Gehäuseteil 30 können somit in radialer Richtung gegen das erste Gehäuseteil 28, insbesondere dessen Befestigungsfortsätze 64, gepresst werden.

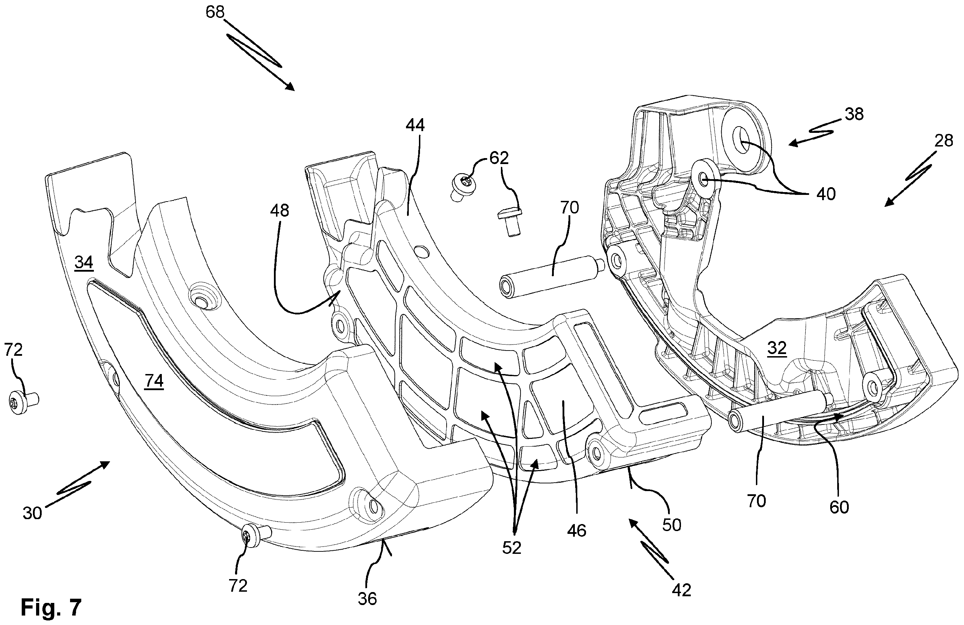

Die **Figuren 7**, **8** und **9** zeigen einen weiteren Bremsstaubpartikelfilter **68.** Der Bremsstaubpartikelfilter68 entspricht in Aufbau und Funktion im Wesentlichen dem zuvor beschriebenen und in den Figuren 1 bis 6 gezeigten Bremsstaubpartikelfilter 18. Nachfolgend werden vorrangig die Unterschiede beschrieben. Im Übrigen sei auf die vorangegangene Beschreibung verwiesen.

Bei dem Bremsstaubpartikelfilter 68 weist ein Einsatzteil 44 eines Filtereinsatzes 42 in seiner Seitenwand 48 mehrere Öffnungen 52 auf, die von einem Filtermedium 46 überdeckt sind, vergleiche insbesondere Figur 7. Auch Öffnungen 54 in einer Umfangswand des Filtereinsatzes 42 sind von dem Filtermedium 46 überdeckt.

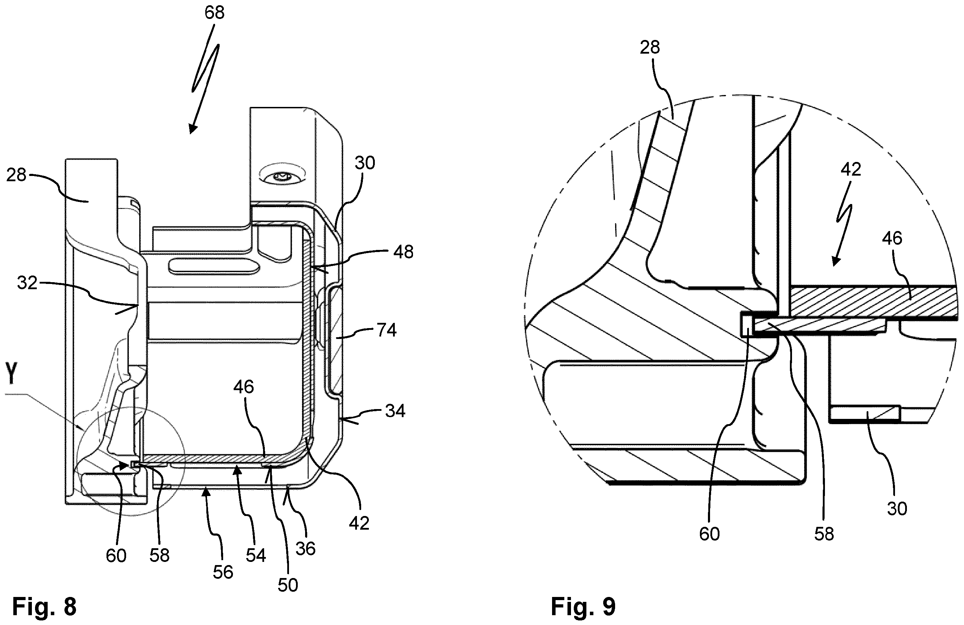

Das Filtermedium 46 ist hier einstückig ausgebildet, siehe Figur 8. Die beiden Schenkel seiner L-Form gehen im Bereich des Übergangs von der Seitenwand 48 zu der Umfangswand 50 des Einsatzteils 44 ineinander über.

Die Seitenwand 48 steht auch hier in axialer Richtung über das Filtermedium 46 vor, vergleiche Figuren 8 und 9. Der Überstand bildet eine gekrümmt verlaufende Umfangskante 58 am freien Ende der Seitenwand 48. Die Umfangskante 58 greift in eine zu einer zweiten Gehäuseseitenwand 34 hin offene Aufnahmenut 60 an der ersten Gehäuseseitenwand 32 ein. Dadurch ist eine Labyrinthdichtung zwischen einem ersten Gehäuseteil 28 und dem Filtereinsatz 42 eingerichtet.

Bei dem Bremsstaubpartikelfilter 68 sind Befestigungsfortsätze **70** in Form von Stehbolzen an das erste Gehäuseteil 28 anschraubbar, vergleiche Figur 7. Der Filtereinsatz 42 weist Aufnahmebereiche für die Befestigungsfortsätze 70 auf. Der beispielsweise mittels Schrauben 62 an einem zweiten Gehäuseteil 30 vormontierte Filtereinsatz 42 kann in axialer Richtung auf die am ersten Gehäuseteil 28 befestigten Stehbolzen aufgeschoben werden. Die Umfangskante 58 gelang dabei in Eingriff mit der Aufnahmenut 60. Zur lösbaren Befestigung der beiden Gehäuseteile 28, 30 und des Filtereinsatzes 42 aneinander können Schrauben **72** in axialer Richtung in die Befestigungsfortsätze 70 eingeschraubt werden. Die Schrauben 72 können Bohrungen in dem zweiten Gehäuseteil 30 und in der Seitenwand 48 des Filtereinsatzes 42 durchragen und in Gewindeabschnitte in den Befestigungsfortsätze 70 eingreifen. Die beiden Gehäuseteile 28, 30 und der Filtereinsatz 42 können derart in axialer Richtung gegeneinander gepresst werden.

An dem Gehäuse 22, insbesondere an der zu einer Außenseite eines Fahrzeugs weisenden zweiten Gehäuseseitenwand 34, kann eine Zierplakette **74** angebracht sein, vergleiche insbesondere Figur 7. Die Zierplakette 74 und das Gehäuse 22 können unterschiedliche Farben aufweisen.

### Bezugszeichenliste

Scheibenbremsanordnung **10**
Bremsscheibe **12**
Bremssattel **14**
Bremssattelhalter **16**
Bremsstaubpartikelfilter **18, 68**
Drehrichtung **20**
Gehäuse **22**
Reibflächen **24**
Mantelfläche **26**
erstes Gehäuseteil **28**
zweites Gehäuseteil **30**
erste Gehäuseseitenwand **32**
zweite Gehäuseseitenwand **34**
Gehäuseumfangswand **36**
Befestigungseinrichtung **38**
Ausnehmungen **40**
Filtereinsatz **42**
Einsatzteil **44**
Filtermedium **46**
Seitenwand **48**
Umfangswand **50**
Öffnung **52, 54**
Strömungsöffnungen **56**
Umfangskante **58**
Aufnahmenut **60**
Dichtschnur **61**
Schrauben **62, 66, 72**
Befestigungsfortsätze **64, 70**
Zierplakette **74**

## Patentansprüche

1. Bremsstaubpartikelfilter (18; 68) für eine Scheibenbremsanordnung (10) mit einer Bremsscheibe (12) und einem Bremssattel (14),
wobei der Bremsstaubpartikelfilter (18; 68) ein Gehäuse (22) mit zwei Gehäuseseitenwänden (32, 34) und mit einer sich zwischen den Gehäuseseitenwänden (32, 34) erstreckenden Gehäuseumfangswand (36) aufweist,
wobei in dem Gehäuse (22) ein, insbesondere im Querschnitt, L-förmiger Filtereinsatz (42) mit einem Filtermedium (46) aufgenommen ist, der sich an einer der Gehäuseseitenwände (32, 34) und an der Gehäuseumfangswand (36) erstreckt,
wobei der Filtereinsatz (42) eine gebogene Umfangskante (58) aufweist, die in eine gebogene Aufnahmenut (60) des Gehäuses (22) eingreift.

2. Bremsstaubpartikelfilter (18; 68) nach Anspruch 1, **dadurch gekennzeichnet, dass** in der Aufnahmenut (60) eine, vorzugsweise keramische und/oder glasfaserhaltige, Dichtschnur (61) angeordnet ist, wobei die Dichtschnur (61) durch die gebogene Umfangskante (58) des Filtereinsatzes (42) verpressbar ist.

3. Bremsstaubpartikelfilter (18; 68) nach Anspruch 1, **dadurch gekennzeichnet, dass** die Aufnahmenut (60) und die in die Aufnahmenut (60) eingreifende Umfangskante (58) eine Labyrinthdichtung ausbilden.

4. Bremsstaubpartikelfilter (18; 68) nach einem der vorhergehenden Ansprüche, **dadurch gekennzeichnet, dass** das Gehäuse (22) zweiteilig ausgebildet ist, wobei eine erste der Gehäuseseitenwände (32) an einem ersten Gehäuseteil (28) ausgebildet ist, und wobei die zweite der Gehäuseseitenwände (34) an einem zweiten Gehäuseteil (30) ausgebildet ist.

5. Bremsstaubpartikelfilter (18; 68) nach Anspruch 4, **dadurch gekennzeichnet, dass** das erste Gehäuseteil (28) eine Befestigungseinrichtung (38) zur Befestigung des Bremsstaubpartikelfilters (18; 68) an einer Fahrzeugstruktur aufweist und/oder das erste Gehäuseteil (28) zumindest teilweise ein Spritzschutzblech der Scheibenbremsanordnung (10) ausbildet.

6. Bremsstaubpartikelfilter (18; 68) nach Anspruch 4 oder 5, **dadurch gekennzeichnet, dass** die Aufnahmenut (60) im ersten Gehäuseteil (28) ausgebildet ist.

7. Bremsstaubpartikelfilter (18; 68) nach einem der Ansprüche 4 bis 6, **dadurch gekennzeichnet, dass** die beiden Gehäuseteile (28, 30) lösbar aneinander befestigt sind.

8. Bremsstaubpartikelfilter (18; 68) nach Anspruch 7, **dadurch gekennzeichnet, dass** das erste Gehäuseteil (28) axiale Befestigungsfortsätze (64; 70) aufweist, an welchen der Filtereinsatz (42) und das zweite Gehäuseteil (30) befestigbar sind.

9. Bremsstaubpartikelfilter (18) nach einem der Ansprüche 7 oder 8, **dadurch gekennzeichnet, dass** der Filtereinsatz (42) und das zweite Gehäuseteil (30) in axialer Richtung gegen das erste Gehäuseteil (28) spannbar sind.

10. Bremsstaubpartikelfilter (68) nach einem der Ansprüche 7 oder 8, **dadurch gekennzeichnet, dass** der Filtereinsatz (42) und das zweite Gehäuseteil (30) in radialer Richtung gegen das erste Gehäuseteil (28), vorzugsweise gegen die Befestigungsfortsätze (64), spannbar sind.

11. Bremsstaubpartikelfilter (18; 68) nach einem der Ansprüche 4 bis 10, **dadurch gekennzeichnet, dass** der Filtereinsatz (42) und das zweite Gehäuseteil (30) von radial und/oder axial außen miteinander verschraubbar sind, vorzugsweise wobei Schrauben (62) das zweite Gehäuseteil (30) und den Filtereinsatz (42) durchragen und in korrespondierende Gegengewinde der Befestigungsfortsätze (64,70) eingreifen.

12. Bremsstaubpartikelfilter (18; 68) nach Anspruch 11, wobei der Filtereinsatz (42) an einer Umfangswand und/oder Seitenwand zumindest eine Bohrung aufweist, die mit einer Positionierung der Gegengewinde der Befestigungsfortsätze (64) korrespondierend vorliegt.

13. Bremsstaubpartikelfilter (18; 68) nach einem der vorhergehenden Ansprüche, **dadurch gekennzeichnet, dass** die Umfangskante (58) des Filtereinsatzes (42) in axialer Richtung in die Aufnahmenut (60) des Gehäuses (22) eintaucht.

14. Bremsstaubpartikelfilter (18; 68) nach einem der vorhergehenden Ansprüche, **dadurch gekennzeichnet, dass** der Filtereinsatz (42) ein Einsatzteil (44) mit einer Seitenwand (48) und einer Umfangswand (50) aufweist, wobei wenigstens eine Öffnung (52, 54) in der Seitenwand (48) und/oder der Umfangswand (50) ausgebildet ist, welche von dem Filtermedium (46) überdeckt ist.

15. Bremsstaubpartikelfilter (18; 68) nach einem der vorhergehenden Ansprüche, **dadurch gekennzeichnet, dass** das Filtermedium (46) mit einem plissierten Balg gebildet ist.

16. Scheibenbremsanordnung (10) aufweisend eine Bremsscheibe (12), einen Bremssattel (14) und einen Bremsstaubpartikelfilter (18; 68) nach einem der vorhergehenden Ansprüche.

17. Filtereinsatz (42) für einen Bremsstaubpartikelfilter (18; 68), insbesondere nach einem der Ansprüche 1 bis 15, wobei der Filtereinsatz (42) L-förmig ausgebildet ist, insbesondere im Querschnitt L-förmig, und ein Filtermedium (46) aufweist, und wobei der Filtereinsatz (42) zum zumindest bereichsweisen Überdecken einer Reibfläche (24) und einer Mantelfläche (26) einer Bremsscheibe (12) ausgebildet ist, und wobei der Filtereinsatz (42) eine gebogene Umfangskante (58) aufweist, die, vorzugsweise in axialer Richtung, über das Filtermedium (46) vorsteht.

18. Filtereinsatz (42) nach Anspruch 17, **dadurch gekennzeichnet, dass** das Filtermedium (46) unlösbar an einem Einsatzteil (44) gehalten ist, vorzugsweise wobei die Umfangskante (58) an dem Einsatzteil (44) ausgebildet ist.

19. Verwendung eines Filtereinsatzes (42) nach einem der Ansprüche 17 oder 18 in einem Bremsstaubpartikelfilter (18; 68) vorzugsweise nach einem der Ansprüche 1 bis 15.
